# EUROPEAN PATENT SPECIFICATION

(11) **EP 0 616 914 B1**
(45) Date of publication and mention of the grant of the patent: **26.11.1997**
(21) Application number: 94301447.2
(22) Date of filing: 01.03.1994
(51) Int. Cl.: B60J 7/053

(54) **Opening roof for a vehicle**
Öffnungsfähiges Fahrzeugdach
Toit ouvrable pour véhicules automobiles

(30) Priority: 20.03.1993 GB 9305821
(43) Date of publication of application: 28.09.1994
(73) Proprietor: Britax Weathershields Limited, Warwick CV34 6DE (GB)
(72) Inventor: Scott, Paul Geoffrey, 7 Kilcote Road, Solihull, Shirley, West Midlands B90 1NR (GB); Botfield, Michael Sydney John, Bournville, Birmingham B30 2HN (GB)
(74) Representative: Spall, Christopher John

(56) References cited:
- EP-A- 0 403 388
- EP-A- 0 555 977
- DE-A- 4 006 160
- FR-A- 2 467 094

## Description

This invention relates to an opening roof assembly for a vehicle comprising a stationary guide track provided on a side of an opening in a fixed vehicle roof and extending in the longitudinal direction of the vehicle, a drive slide arranged to be driven along said guide track, a support slide slidably guided in the guide track and adapted to be driven by the drive slide, a panel closing said opening in said vehicle roof in a closed position and being capable of being firstly pivoted about a transverse axis adjacent its front edge from its closed position to a position in which its rear edge is raised above the fixed vehicle roof and then being slidably movable rearwardly into positions above the fixed roof, height adjusting means coupling the transverse pivot axis to the drive slide, a lift link having its upper end pivotally connected to the panel at a location behind said transverse pivot axis and its lower end pivotally coupled to the support slide, latch means slidable along the track into engagement with a detent on the panel near its rear edge, and coupling means for selectively connecting the latch means to the drive slide.

EP-A-0296644 discloses an opening roof assembly of this type consisting of a large number of parts. It is an object of the present invention to provide a simpler mechanism.

According to the invention, in an opening roof assembly of the type described above, the lift link is pivotally connected to the panel and the support slide by respective pivot joints which allow only relative angular movement, and the height adjusting means comprises an inclined slot in the support slide which receives a pivot pin fast with the panel, the coupling means being arranged to prevent movement of the support slide along the track when the latch means is connected to the drive means.

An embodiment of the invention will now be described, by way of example, with reference to the accompanying drawings, in which:
Figure 1 is a perspective view of the top of a motor car fitted with an opening roof of the type to which the invention relates;
Figure 2 is a perspective view of part of the mechanism for an opening roof in accordance with the invention suitable for mounting on one side of the roof opening illustrated in Figure 1;
Figure 4 is a side view of a support slide forming part of the mechanism shown in Figure 2;
Figure 5 is a side view of a pivot lift arm forming part of the mechanism shown in Figure 2;
Figure 6 is a side view of a lift link forming part of the mechanism shown in Figure 2;
Figure 7 is a side view of the mechanism shown in Figure 2 with the panel in the fully closed position;
Figure 8 is a side view, similar to Figure 7, but with the mechanism in an unlocked position in which opening movement is about to commence;
Figure 9 is a side view, similar to Figure 8, but with the rear edge of the panel slightly raised above the vehicle roof;
Figure 10 is a side view, similar to Figure 9, with the rear edge of the panel in its fully raised position;
Figure 11 is a side view, similar to Figure 10, but with the mechanism in a position in which the panel is free to slide rearwardly; and
Figure 12 is a side view, similar to Figure 11, but with the panel slid rearwardly and its rear half broken away.

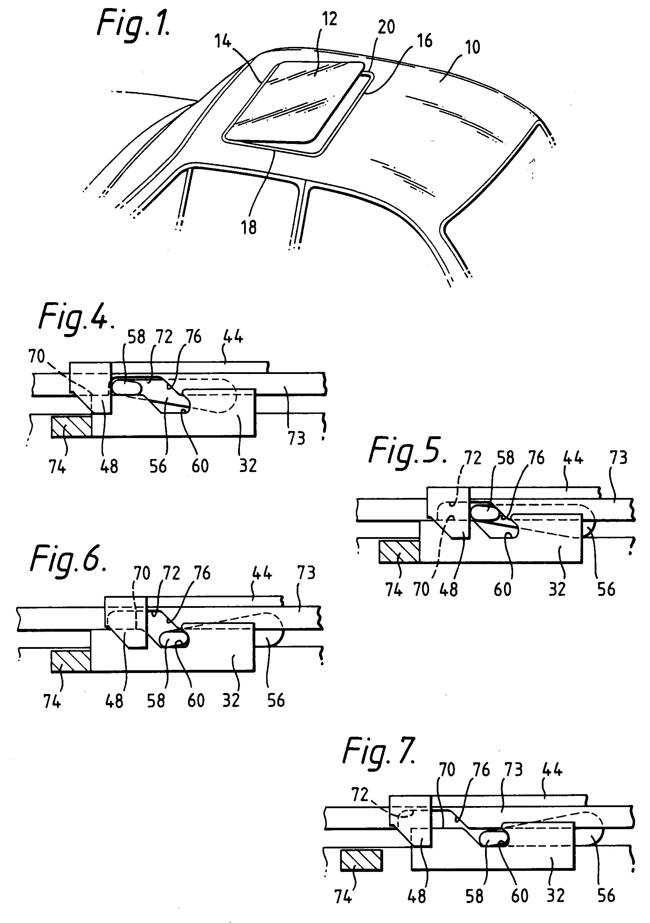

Figure 1 shows the roof 10 of a motor car containing an opening which can be closed by a panel 12 and which is surrounded by a frame comprising a front member 14, a back member 16 and side members 18 and 20. When closed, the panel 12 is pressed against seals (not shown) on the four frame members 14 to 20.

Figure 2 shows the panel 12 in its fully closed position. A guide track 22 is secured to the underside of the side member 18 of the frame. A similar guide track (not shown) is secured to the underside of the other side member 20. Referring to Figure 3, each guide track 22 has inner, central and outer channels 24, 26 and 28. The outer channel 28 supports a support slide 30 which has a flange 32 projecting part way over the central channel 26. The support slide 30 also has a slot 34 near its front end for receiving a pivot pin 36 which is secured to a leg 38 projecting from the front end of a panel support arm 40 to which the panel 12 is secured. The panel support arm 40 has a latch ramp 42 near its rear end.

The inner channel 24 contains a latch slide 44, the rear end of which has a detent ramp 46 for engagement with the latch ramp 42. The front edge of the latch slide 44 has a flange 48 which projects over the central channel 26. The latch slide 44 is biased rearwardly by a spring (not shown).

The central channel 26 has a groove 50 in its bottom surface for a drive cable 52 which is coupled to a drive slide 54 (received in the channel 26). A drive link 56, carrying a drive peg 58 on one end, has its other end pivotally attached to the drive slide 54 so as to be movable into and out of engagement with an open-ended slot 60 in the edge of the flange 32 of the support slide 30.

A lift lever 62 is coupled to the rear end of the support slide 30 by a pivot pin 64. A second pivot pin 66, carried by the panel support arm 40, extends through a hole 68 in the top end of the lever 62.

When the panel 12 is in its fully closed position, the drive peg 58 is received between the edge 70 of the flange 32 on the support slide 32 in front of the slot 60 and a cutout 72 in the inner side flange 73 of the central channel 26, as shown in Figure 3. The drive peg 58 abuts against the flange 48 on the latch slide 44, holding its detent ramp 46 fully engaged with the latch ramp 42 on the panel support arm 40 thus holding the rear edge of the panel 12 down and also preventing rearward movement of the support slide 30. Forward movement of the support slide 30 is prevented by abutment with a stop 74 (Figures 2 and 4) which is secured to the bottom of the outer channel 28.

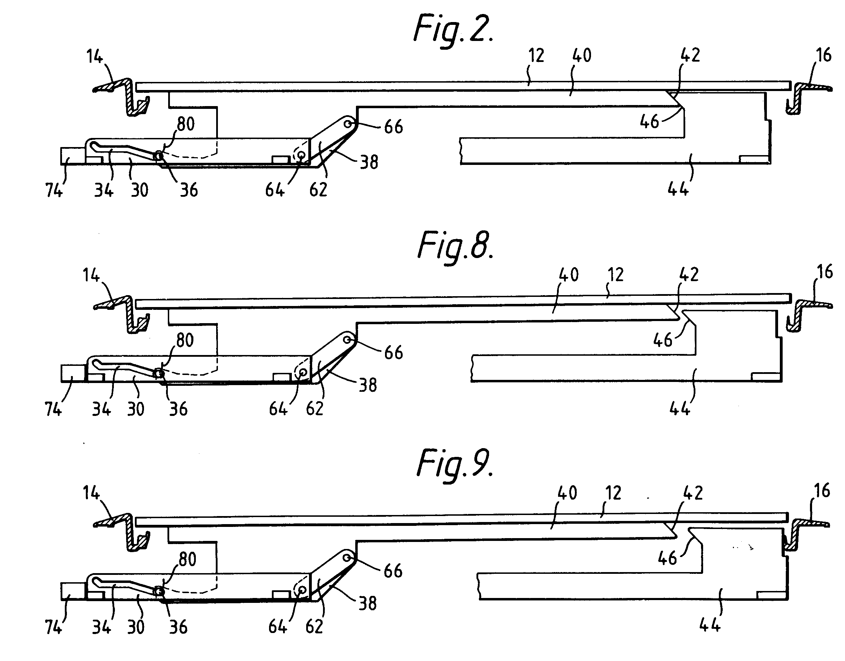

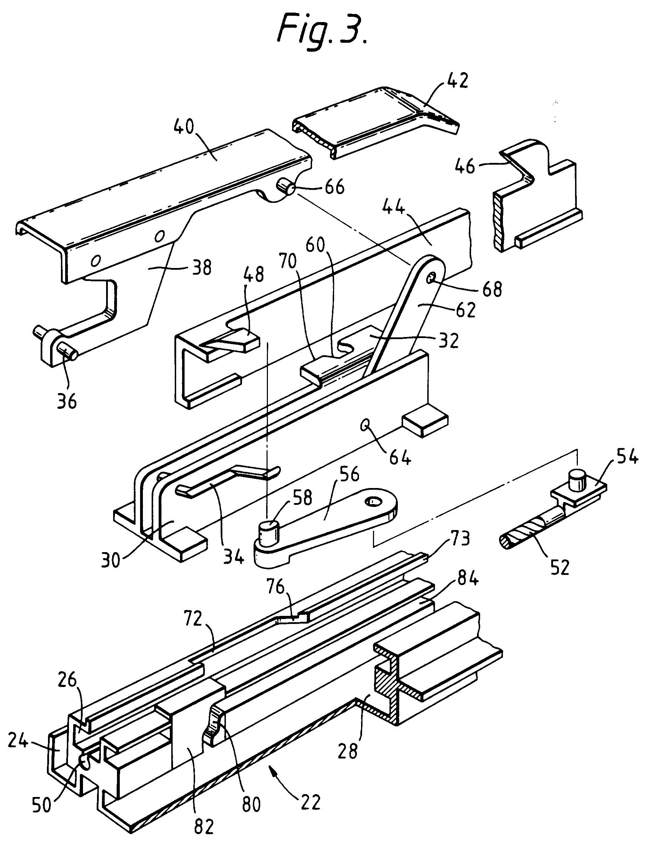

In order to open the panel 12, the drive slide 54 is moved rearwardly, moving the drive peg 58 into engagement with the sloping rear end 76 of the cutout 72, as shown in Figure 5. The detent ramp 46 still overlaps the latch ramp 42, as shown in Figure 8, preventing all but minimal rearward movement of the support slide 30. During further rearward movement, the drive peg 58 is displaced by the sloping rear end 76 of the cutout 72, into the slot 60 in the flange 32 of the support slide 30. The detent ramp 46 remains overlapped with the latch ramp 42 until the peg 58 is partially engaged in the slot 60. By the time the peg 58 reaches the inner ind of the slot 60, as shown in Figure 6, the latch slide 44 has now moved into abutment with the back member 16 of the frame, thus holding the flange 48 back from the peg 58.

Continued movement brings the peg 58 into abutment with the rear edge of the slot 60 (Figure 7), with the result that the support slide 34 is moved rearwardly from the stop 74, as shown in Figure 9, causing the pivot pin 36 to move up the rear inclined section of the slot 34 and also up a slot 80 in an inset block 82 in the guide track 22 (Figure 2). The block 82 is not shown in Figures 2 and 8 to 12, the slot 80 being represented by a single line denoting the trajectory of the centre of the pin 36 as it moves up the slot 80.

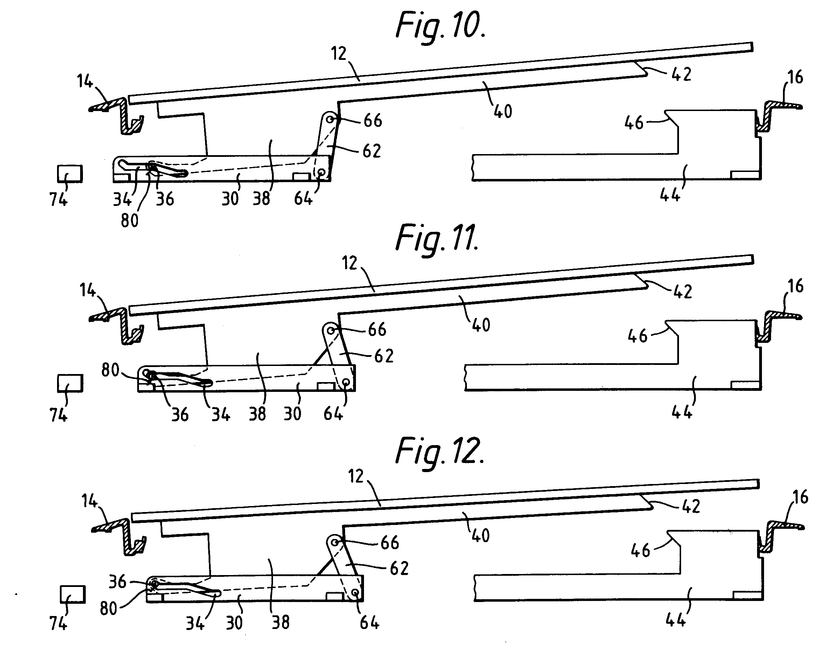

In Figure 9, the panel 12 is lifted slightly at both ends but otherwise is still substantially in a closed position. Further rearward movement of the support slide 30, to the position shown in Figure 10, causes the pivot pin 36 to reach the front horizontal section of the slot 34.

As the pivot pin 36 completes its movement along the front horizontal section of the slot 36, the panel 12 moves to its fully tilted position illustrated in Figure 11. Subsequent forward movement of the support slide 30 causes the pin 36 to move up the short inclined section at the front end of the slot 34 (Figure 12) and out of the top of the slot 80 so that it is free to slide along the horizontal slot 84 in the side wall of the outer channel 28 of the guide track 22. Engagement of the pin 36 with the bottom of the slot 82 retains the pin 36 firmly at the front end of the slot 34 in the guide shoe so that the guide shoe 30, the leg 38 and the lift lever 62 form a rigid triangular structure to support the panel 12 as its slides rearwardly.

When the panel 12 is to be moved back to its closed position, the mechanism moves successively through the positions illustrated in Figures 11, 10 and 9. When the support slide 30 comes into abutment with the stop 74, continued movement of the drive slide 38 brings the peg 58 into abutment with the front edge of the slot 60 (Figure 7), with the result that it is displaced out of engagement with the support slide 30 and into the cutout 72 (Figure 5) where it abuts against the flange 48 to move the latch slide 44 back to its engaged position.

## Claims

1. An opening roof assembly for a vehicle comprising a stationary guide track (22) provided on a side of an opening in a fixed vehicle roof (10) and extending in the longitudinal direction of the vehicle, a drive slide (54) arranged to be driven along said guide track (22), a support slide (30) slidably guided in the guide track (22) and adapted to be driven by the drive slide (54), a panel (40) closing said opening in said vehicle roof (10) in a closed position and being capable of being firstly pivoted about a transverse axis (36) adjacent its front edge from its closed position to a position in which its rear edge is raised above the fixed vehicle roof (10) and then being slidably movable rearwardly into positions above the fixed roof (10), height adjusting means (34) coupling the transverse pivot axis (36) to the drive slide (54), a lift link (62) having its upper end pivotally connected to the panel (40) at a location behind said transverse pivot axis (36) and its lower end pivotally coupled to the support slide (30), latch means (44) slidable along the track (22) into engagement with a detent on the panel (40) near its rear edge, and coupling means (56) for selectively connecting the latch means (44) to the drive slide (54), characterised in that the lift link (62) is pivotally connected to the panel (40) and the support slide (30) by respective pivot joints (64, 66) which allow only relative angular movement, and the height adjusting means comprises an inclined slot (34) in the support slide (30) which receives a pivot pin (36) fast with the panel (40), the coupling means (56) being arranged to prevent movement of the support slide (30) along the track (22) when the latch means (44) is connected to the drive means.

2. An opening roof assembly according to claim 1, wherein the coupling means (56) is arranged to disconnect the drive slide (54) from the support slide (30) when it is coupled to the latch means (44) and to disconnect the drive slide (54) from the latch means (44) when it is coupled to the support slide (30).

3. An opening roof assembly according to claim 1 or 2, wherein the coupling means comprises a lever (56) pivotally mounted on the drive slide (54) so that a projection (58) thereon is movable by a cam formation (76) on the track (22) into engagement with an abutment (60) on the support slide (30) as a result of rearward movement of the drive slide (54).

4. An opening roof assembly according to claim 4, wherein the abutment on the support slide (30) engaged by the projection (58) on the drive slide (54) comprises a slot (60) and the track (22) has a flange (73) arranged to retain the projection (58) in the slot (60) when the support slide (30) is displaced rearwardly.

5. An opening roof assembly according to claim 3 or 4, wherein the projection (58) is movable by a cam formation (60) on the support slide (30) into engagement with an abutment (48) on the latch means (44) as a result of forward movement of the drive slide (54).

## Patentansprüche

1. Eine Anordnung mit zu öffnendem Dach für ein Fahrzeug, wobei die Anordnung aufweist: eine stationäre Führungsbahn (22), die an einer Seite einer Öffnung in einem festen Fahrzeugdach (10) vorgesehen ist und sich in der Längsrichtung des Fahrzeugs erstreckt, eine Antriebsschiebevorrichtung (54), die so angeordnet ist, um entlang der genannten Führungsbahn (22) angetrieben zu werden, eine Tragschiebevortichtung (30), welche in der Führungsbahn (22) verschiebbar geführt und dazu befähigt ist, durch die Antriebsschiebevorrichtung (54) angetrieben zu werden, eine Platte (40), welche die genannte Öffnung in dem genannten Fahrzeugdach (10) in einer geschlossenen Position schließt und dazu befähigt ist, zuerst um eine Querachse (36) benachbart zu ihrem vorderen Rand aus ihrer geschlossenen Position in eine Position verschwenkt zu werden, in welcher ihr hinterer Rand oberhalb des festen Fahrzeugdaches (10) angehoben ist, wobei die Platte (40) sodann nach rückwärts in Positionen oberhalb des festen Daches (10) in verschiebbarer Weise bewegbar ist, eine Höhenverstellungseinrichtung (34), welche die quergerichtete Schwenkachse (36) mit der Antriebsschiebevorrichtung (54) verbindet, ein Anhebeverbindungsstück (62), dessen oberes Ende mit der Platte (40) an einer Stelle hinter der genannten quergerichteten Schwenkachse (36) in verschwenkbarer Weise verbunden ist und dessen unteres Ende mit der Tragschiebevorrichtung (30) in verschwenkbarer Weise verbunden ist, eine Verriegelungseinrichtung (44), die entlang der Bahn (22) in ein Ineingriffgelangen mit einer Arretierung an der Platte (40) nahe ihrem hinteren Rand verschiebbar ist, und eine Kopplungseinrichtung (56) zum selektiven Verbinden der Verriegelungseinrichtung (44) mit der Antriebsschiebevorrichtung (54), **dadurch gekennzeichnet,** daß das Anhebeverbindungsstück (62) mit der Platte (40) und der Tragschiebevorrichtung (30) durch entsprechende Drehverbindungen (64, 66) in verschwenkbarer Weise verbunden ist, welche lediglich eine relative Winkelbewegung erlauben, und daß die Höhenverstellungseinrichtung einen in der Tragschiebevorrichtung (30) befindlichen geneigten Schlitz (34) aufweist, welcher einen mit der Platte (40) festen Drehstift (36) aufnimmt, wobei die Kopplungseinrichnung (56) so angeordnet ist, um eine Bewegung der Tragschiebevorrichtung (30) entlang der Bahn (22) zu verhindern, wenn die Verriegelungseinrichtung (44) mit der Antriebseinrichtung verbunden ist.

2. Eine Anordnung mit zu öffnendem Dach gemäß Anspruch 1, bei welcher die Kopplungseinrichtung (56) so angeordnet ist, um die Antriebsschiebevorrichtung (54) von der Tragschiebevorrichtung (30) zu trennen, wenn sie mit der Verriegelungseinrichtung (44) gekoppelt ist, und um die Antriebsschiebevorrichtung (54) von der Verriegelungseinrichtung (44) zu trennen, wenn sie mit der Tragschiebevorrichtung (30) gekoppelt ist.

3. Eine Anordnung mit zu öffnendem Dach gemäß Anspruch 1 oder 2, bei welcher die Kopplungseinrichtung einen Hebel (56) aufweist, der an der Antriebsschiebevorrichtung (54) verschwenkbar angebracht ist, so daß ein Vorsprung (58) hieran durch ein Steuerflächengebilde (76) an der Bahn (22) in ein Ineingriffkommen mit einem Anschlag (60) an der Tragschiebevorrichtung (30) infolge einer Rückwärtsbewegung der Antriebsschiebevorrichtung (54) bewegbar ist.

4. Eine Anordnung mit zu öffnendem Dach gemäß Anspruch 4, bei welcher der Anschlag an der Tragschiebevorrichtung (30), mit welchem der Vorsprung (58) an der Antriebsschiebevorrichtung (54) in Eingriff kommt, einen Schlitz (60) aufweist und die Bahn (22) einen Flansch (73) aufweist, der so angeordnet ist, um den Vorsprung (58) in dem Schlitz (60) zu halten, wenn die Tragschiebevorrichtung (30) nach rückwärts verschoben ist.

5. Eine Anordnung mit zu öffnendem Dach nach Anspruch 3 oder 4, bei welcher der Vorsprung (58) durch ein Steuerflächengebilde (60) an der Tragschiebevorrichtung (30) in ein Ineingriffkommen mit einem Anschlag (48) an der Verriegelungseinrichtung (44) infolge einer Vorwärtsbewegung der Antriebsschiebevorrichtung (54) bewegbar ist.

## Revendications

1. Ensemble de toit ouvrant pour un véhicule comprenant une voie de guidage stationnaire (22) prévue sur un côté d'une ouverture dans un toit fixe de véhicule (10) et s'étendant dans la direction longitudinale du véhicule, un coulisseau d'entraînement (54) agencé pour être entraîné le long de ladite voie (22), un coulisseau de support (30) guidé de manière coulissante dans la voie de guidage (22) et adapté pour être entraîné par le coulisseau d'entraînement (54), un panneau (40) fermant ladite ouverture dans ledit toit de véhicule (10) dans une position fermée et étant capable en premier lieu de pivoter autour d'un arbre transverse (36) adjacent à son bord frontal depuis sa position fermée vers une position dans laquelle son bord arrière est élevé au dessus du toit fixe de véhicule (10) et étant alors déplaçable de manière coulissante vers l'arrière dans des positions au dessus du toit fixe (10), un moyen d'ajustement de hauteur (34) couplant l'arbre de pivot transverse (36) au coulisseau d'entraînement (54), un lien de soulèvement (62) ayant son extrémité supérieure reliée de manière pivotante au panneau (40) au niveau d'une position derrière ledit arbre de pivot transverse (36) et son extrémité inférieure couplée de manière pivotante au coulisseau de support (30), un moyen de verrouillage (44) coulissant le long de la voie (22) en coopération avec une détente sur le panneau (40) à proximité de son bord arrière, et un moyen (56) de couplage pour relier sélectivement le moyen (44) de verrouillage au coulisseau d'entraînement (54), caractérisé en ce que le lien de soulèvement (62) est relié de manière pivotante au panneau (40) et au coulisseau de support (30) par des articulations de pivot respectives (64, 66) qui permettent seulement un mouvement angulaire relatif, et le moyen d'ajustement de hauteur comprend une fente inclinée (34) dans le coulisseau de support (30) qui reçoit une broche de pivot (36) solidaire du panneau (40), le moyen (56) de couplage étant agencé pour éviter un mouvement du coulisseau de support (30) le long de la voie (22) lorsque le moyen (44) de verrouillage est relié au moyen d'entraînement.

2. Ensemble de toit ouvrant selon la revendication 1, dans lequel le moyen (56) de couplage est agencé pour déconnecter le coulisseau d'entraînement (54) du coulisseau de support (30) lorsqu'il est couplé au moyen (44) de verrouillage et pour déconnecter le coulisseau d'entraînement (54) du moyen (44) de verrouillage lorsqu'il est couplé au coulisseau de support (30).

3. Ensemble de toit ouvrant selon la revendication 1 ou 2, dans lequel le moyens de couplage comprend un lever (56) monté de manière pivotante sur le coulisseau d'entraînement (54) de manière qu'une saillie (58) sur celui-ci est déplaçable par une structure de came (76) sur la voie (22) en coopération avec une butée (60) sur le coulisseau de support (30) suite au mouvement arrière du coulisseau d'entraînement (54).

4. Ensemble de toit ouvrant selon la revendication 3, dans lequel la butée sur le coulisseau de support (30) coopérant avec la saillie (58) sur le coulisseau d'entraînement (54) comprend une fente (60) et la voie (22) a une bride (73) agencée pour retenir la saillie (48) dans la fente (60) lorsque le coulisseau de support (30) est déplacé vers l'arrière.

5. Ensemble de toit ouvrant selon la revendication 3 ou 4, dans lequel la saillie (58) est déplaçable par une structure de came (60) sur le coulisseau de support (30) en coopération avec une butée (48) sur le moyen (44) de verrouillage suite à un mouvement avant du coulisseau d'entraînement (54).
